# EUROPEAN PATENT SPECIFICATION

(11) **EP 2 042 357 B1**
(45) Date of publication and mention of the grant of the patent: **12.05.2010**
(21) Application number: 08165259.6
(22) Date of filing: 26.09.2008
(51) Int. Cl.: B60G 17/016, B60G 21/055

(54) **Stabilizer control device, stabilizer control method and stabilizer control program**
Stabilisatorsteuervorrichtung, Stabilisatorsteuerverfahren und Stabilisatorsteuerprogramm
Dispositif de contrôle de stabilisateur, procédé de contrôle de stabilisateur et programme de contrôle de stabilisateur

(30) Priority: 26.09.2007 JP 2007248589
(43) Date of publication of application: 01.04.2009
(73) Proprietor: Aisin AW Co., Ltd., Fujii-cho Anjo-shi, Aichi 444-1192 (JP); Aisin Seiki Kabushiki Kaisha, Kariya-shi, Aichi 448-8650 (JP)
(72) Inventor: Miyajima, Takayuki c/o Aisin Aw Co., Ltd, Okazaki-shi, Aichi 444-8564 (JP); Hidaka, Seiji c/o Aisin Seiki KK, Intell.Prop.Dpt., Kariya-shi, Aichi 448-8650 (JP); Nitta, Hirofumi c/o Aisin Seiki KK, Intell.Prop.Dpt., Kariya-shi Aichi 448-8650 (JP)
(74) Representative: TBK-Patent

(56) References cited:
- EP-A- 1 541 389
- EP-A- 1 568 521
- WO-A-02/053398
- WO-A-2006/134954

## Description

### 1. Field of the Invention

The present invention relates to a stabilizer control device, method and program controlling a stabilizer mounted on a vehicle.

### 2. Description of the Related Art

Conventionally, there is known a technology to control a stabilizer according to detection values from sensors mounted in a vehicle, for example, a technology to detect acceleration in a lateral direction of a vehicle by various sensors mounted in the vehicle, and to change the degree of control of roll stiffness by a stabilizer according to the acceleration (for example, refer to Japanese Patent Application Publication No. JP-A-2006-347406).

In the conventional technology, it is arranged to implement control of the roll stiffness according to the acceleration in a lateral direction when the acceleration in a lateral direction detected by sensors exceeds a certain threshold. However, in this arrangement, also in a curve section, control to increase the roll stiffness is not implemented until the certain threshold is exceeded. In a situation that relatively small acceleration in a lateral direction is operating in the curve section, rolling of the vehicle cannot be suppressed appropriately. Therefore, it is possible that the control of the roll stiffness cannot be implemented appropriately in a section where the roll stiffness should be controlled.

Document WO 01/053398 A discloses a system for operating a coupled anti-roll bar on a motor vehicle, whereby the anti-roll bar may be released by means of a coupling. The system comprises means which determine the environment in front of the vehicle and the operation of the coupling occurs dependent upon the determined environment. The roadway in front of the vehicle and/or obstacles in front of the vehicle are, in particular, determined as environment.

The present invention is made in view of the above problem, and an object thereof is to provide a technology capable of controlling the roll stiffness appropriately in a section where the roll stiffness should be controlled.

To achieve the above object, according to an aspect of the invention, there is provided a stabilizer control device as defined in claim 1. According further aspects of the invention, there are provided a stabilizer control method as defined in claim 5 and a stabilizer control program as define din claim 6. Further aspects and features of the invention are set out in the dependent claims.

In the present invention, information indicating a curve section existing in a traveling direction of a vehicle is obtained. In a curve section, a smaller threshold than in a section other than the curve section is set for the acceleration in a lateral direction. The roll stiffness is controlled when the acceleration in a lateral direction is equal to or larger than the threshold. Specifically, in a curve section, the control of the roll stiffness is started according to the acceleration in a lateral direction that is smaller than in other sections, and rolling can be suppressed appropriately in the curve section. Further, in a section other than the curve section, the control of the roll stiffness is started according to the acceleration in a lateral direction that is larger than in the curve section, and the roll stiffness does not increase inappropriately according to minute acceleration in a lateral direction. Therefore, the control of the roll stiffness can be performed appropriately.

Here, a lateral acceleration information obtaining unit is sufficient as long as it is capable of obtaining information indicating acceleration in a lateral direction operating on the vehicle. The acceleration in a lateral direction may be obtained directly by a sensor such as an acceleration sensor, or the acceleration in a lateral direction may be obtained indirectly by estimation based on detection values from a rudder angle sensor and a vehicle speed sensor or a detection value from a sensor or the like indicating behavior of the suspensions. It is thus possible to adopt various arrangements. Note that the acceleration in a lateral direction may be acceleration having a component in a direction that is perpendicular to the traveling direction of the vehicle and is parallel to the road on which the vehicle is traveling.

A curve section information obtaining unit is sufficient as long as it is capable of obtaining information indicating a curve section, and as long as it is capable of obtaining information indicating a curve section where the curvature is equal to a predetermined value on the road on which the vehicle is traveling. For example, information indicating the start position, the end position, and so on of a curve section may be recorded in advance in a recording medium, and the information indicating a curve section may be obtained by referring to the information. Information indicating nodes or positions of shape interpolation points may be recorded in a recording medium in advance, and the information indicating a curve section may be obtained by identifying the road shape from a sequence of the nodes and/or shape interpolation points.

Further, it may be arranged such that the information indicating these curve sections is recorded in a recording medium in advance as map information, and the information indicating a curve section is obtained by referring to the map information. In this arrangement, it is possible to add the function of the present invention to a navigation apparatus performing route guidance or the like of the vehicle using the map information. Furthermore, by making an arrangement to include information indicating a curve section in the map information, it is possible to recognize that a curve section is approaching before the vehicle reaches the curve section, and thus the control of the roll stiffness can be performed securely at a time point to reach the curve section.

In an arrangement to control the roll stiffness by a stabilizer based on information indicating the acceleration in a lateral direction, a stabilizer control unit is sufficient as long as it is capable of changing the threshold for the acceleration in a lateral direction. Specifically, in an arrangement to perform the control of the roll stiffness when the acceleration in a lateral direction is equal to or larger than a threshold, in a curve section a smaller threshold than in a section other than the curve section is set for the acceleration in a lateral direction. With this arrangement, it is possible to create, in a curve section, a state that the control of the roll stiffness is started in response to small acceleration in a lateral direction, and to create, in a section other than the curve section, a state that the control of the roll stiffness is started in response to larger acceleration than the smaller acceleration in a lateral direction. Therefore, the control of the roll stiffness can be performed appropriately even in a state that the small acceleration in a lateral direction is operated on the vehicle in a curve section where the roll stiffness should be controlled.

Note that here it is sufficient as long as it is possible to switch at least between a state that the control of the roll stiffness is implemented and a state that it is not implemented, according to the magnitude of the acceleration in a lateral direction with respect to the threshold. However, as a matter of course, the degree of response to the acceleration in a lateral direction when controlling the roll stiffness (adjustment width of the roll stiffness) may be controlled to be large in a curve section and be small in a section other than the curve section. Further, in any section, when controlling the degree of the roll stiffness, it is sufficient as long as the roll stiffness can be controlled to be higher as the acceleration in a lateral direction gets larger.

Furthermore, as an arrangement to implement the control of the roll stiffness securely in a curve section, it may be arranged such that the threshold when performing the control of the roll stiffness by a stabilizer is kept to be the smaller threshold on a road where curve sections continue. For example, it is arranged to obtain information indicating two or more curve sections existing in a traveling direction of the vehicle, and keep a state that the smaller threshold is set through the curve sections when the distance between the curve sections is equal to or shorter than a predetermined distance.

In this arrangement, the state that the smaller threshold is set is kept in two or more continuous curve sections and a straight section between the curve sections. Therefore, the control of the roll stiffness can be implemented securely in two or more continuous curve sections and a straight section between the curve sections. Note that here, as the distance between the two curve sections, it is sufficient as long as a distance of the curve sections from each other can be defined. For example, a distance between the end position of a curve section and the start position of the next curve section (distance of a straight section) may be used as the distance between the curve sections. Therefore, in this arrangement, in the straight section between the curve sections, a threshold equal to that in the curve sections is kept exceptionally.

Further, an approach like the present invention, to obtain information indicating a curve section and to set in the curve section a smaller threshold than in a section other than the curve section for the acceleration in a lateral direction, is applicable also as a program or a method. Further, the stabilizer control device, program and method as above may be realized as an independent stabilizer control device or be realized using parts common to those provided in the vehicle, and thus various modes are included therein. For example, a navigation apparatus including the stabilizer control device as above, as well as a method, and a program can be provided. Further, an appropriate change can be made such that a part is software and a part is hardware, and the like. Moreover, the present invention is realized also as a recording medium of a program controlling the stabilizer control device. As a matter of course, the recording medium of the software may be a magnetic recording medium, or magneto-optical recording medium, and this can be considered as exactly the same for any other recording medium developed in the future.
FIG. 1 is a block diagram of a navigation apparatus including a stabilizer control device;
FIG. 2 is a flowchart of stabilizer control processing; and
FIG. 3 is a diagram showing an operation example.

Here, an embodiment of the present invention will be explained according to the following order.
(1) Structure of a navigation apparatus
(2) Stabilizer control processing
(3) Other embodiments

### (1) Structure of a navigation apparatus

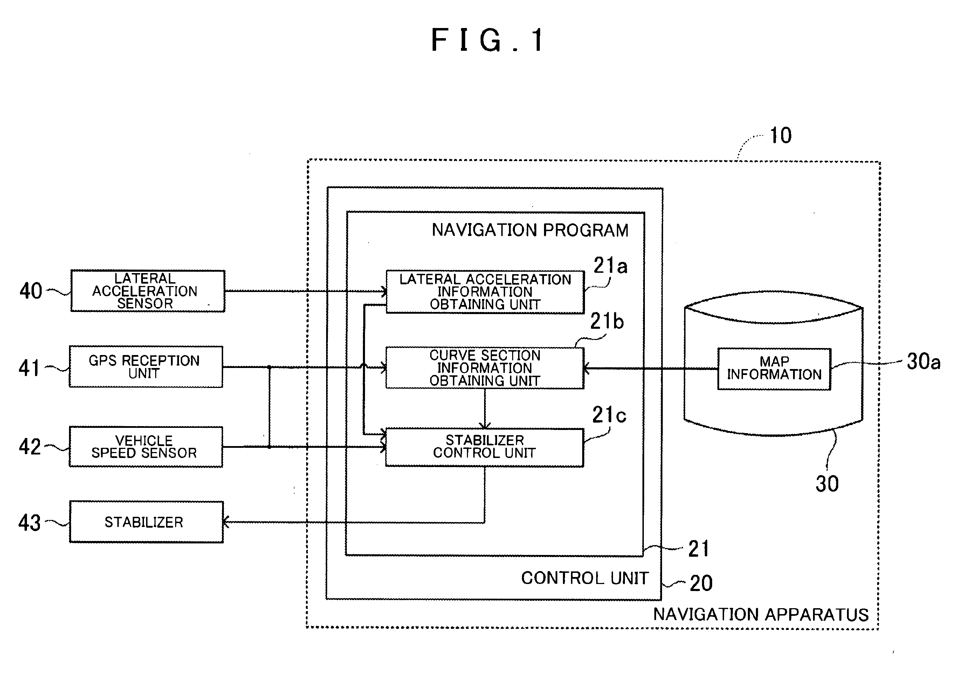

FIG. 1 is a block diagram showing a structure of a navigation apparatus 10 including a stabilizer control device according to the present invention. The navigation apparatus 10 includes a control unit 20 having a CPU, a RAM, a ROM, and so on, and a storage medium 30. A program stored in the storage medium 30 or the ROM can be executed by the control unit 20. In this embodiment, as one of such programs, a navigation program 21 can be implemented, and the navigation program 21 includes, as one of its functions, a function to control roll stiffness by a stabilizer.

A vehicle in this embodiment (vehicle in which the navigation apparatus 10 is mounted) includes a lateral acceleration sensor 40, a GPS reception unit 41, a vehicle speed sensor 42, and a stabilizer 43 for realizing the function by the navigation program 21. By cooperation of these parts and the control unit 20, the function by the navigation program 21 is realized.

The lateral acceleration sensor 40 outputs a signal corresponding to acceleration operating on the vehicle (acceleration in a lateral direction) and having a component in a direction parallel to a lateral direction of the vehicle. The control unit 20 obtains this signal via a not-shown interface, and obtains the acceleration in a lateral direction operating on the vehicle. The GPS reception unit 41 receives a radio wave from a GPS satellite, and outputs information for calculating the current position of the vehicle via a not-shown interface. The control unit 20 obtains this signal to obtain the current position of the vehicle.

The vehicle speed sensor 42 outputs a signal corresponding to rotation speed of wheels provided on the vehicle. The control unit 20 obtains this signal via a not-shown interface and obtains the speed of the vehicle. The vehicle speed sensor 42 is used for obtaining information indicating the speed of the vehicle, and also used for correcting the current position of the vehicle identified from the output signal of the GPS reception unit 41.

The arrangement for obtaining the current position of the vehicle is naturally not limited to the above arrangement. An arrangement to obtain the current position based on behavior of the vehicle identified by a gyro sensor, a steering sensor or the like may be adopted, or an arrangement to correct the current position based on an output signal from the vehicle speed sensor, the gyro sensor, or the like or a trace of the vehicle may be adopted. Note that as the arrangement for obtaining information indicating behavior of the vehicle, other various kinds of arrangements can be adopted. An arrangement to identify the current location of the vehicle by a sensor and/or a camera, an arrangement to obtain the information indicating behavior of the vehicle by signal from GPS, a trace of the vehicle on a map, inter-vehicle communication, road-vehicle communication, or the like can be adopted.

The stabilizer 43 is a mechanism including substantially rod shape members mounted on the vehicle to suppress rolling of the vehicle, and is capable of controlling the roll stiffness of the vehicle by a control signal outputted by the control unit 20. Specifically, in this embodiment, substantially rod shape members provided between left and right wheels of the vehicle in a front part and a rear part of the vehicle respectively are coupled to an actuator at a center of the vehicle. By the control signal outputted by the control unit 20, a state of tolerating relative rotation in the left and right rod shape members and a state of suppressing the relative rotation is determined, and the degree of suppressing the relative rotation can be controlled.

By executing the navigation program 21, the control unit 20 performs route search or the like for the vehicle based on output information from the GPS reception unit 41, map information which will be described later, or the like, and performs route guidance or the like via a not-shown display unit or a speaker. Here, at this time, in a curve section, a smaller threshold than in a section other than the curve section is set for the acceleration in a lateral direction, and control of the roll stiffness is started when the acceleration in a lateral direction is equal to or larger than the threshold. For this purpose, the navigation program 21 includes a lateral acceleration information obtaining unit 21a, a curve section information obtaining unit 21b, and a stabilizer control unit 21c.

Further, in the storage medium 30, map information 30a for implementing guidance by the navigation program 21 is stored. The map information 30a includes node data indicating nodes set on the road on which the vehicle is traveling, shape interpolation point data for identifying the shape of the road between nodes, link data indicating coupling of nodes to each other, data indicating features existing on and in the vicinity of the road, information indicating curve sections (data indicating start positions and end positions of curve sections), and so on, and is used for identifying the current position of the vehicle, guiding to a destination, identifying a curve section, and the like.

The lateral acceleration information obtaining unit 21a is a module obtaining a signal corresponding to the acceleration in a lateral direction outputted by the lateral acceleration sensor 40, and transfers information indicating the acceleration in a lateral direction to the stabilizer control unit 21c. The curve section information obtaining unit 21b is a module obtaining the map information 30a by referring to the storage medium 30, and extracts information regarding the road in a traveling direction of the vehicle from information recorded in the map information 30a and identifies the start position and the end position of the curve section ahead of the vehicle. Information indicating the start position and the end position of the curve section is transferred to the stabilizer control unit 21 c.

The stabilizer control unit 21c is a module controlling the stabilizer 43 based on the information indicating the acceleration in a lateral direction and information indicating the start position and the end position of a curve section. Specifically, when the acceleration in a lateral direction is equal to or larger than a predetermined threshold, the stabilizer control unit 21c outputs to the stabilizer 43 a control signal to vary the roll stiffness of the stabilizer 43 according to the acceleration in a lateral direction. For example, when the acceleration in a lateral direction is equal to or larger than the threshold, the unit outputs a control signal to control the stabilizer 43 so that the roll stiffness becomes higher as the acceleration in a lateral direction gets larger. As a result, the stabilizer 43 generates, in an actuator, force to suppress relative rotation of the left and right rod shape members according to the magnitude of the acceleration in a lateral direction, thereby realizing the roll stiffness capable of suppressing rolling of the vehicle.

Further, in this embodiment, the stabilizer control unit 21c can change the threshold depending on the section of the road where the vehicle is traveling, and sets the threshold so that the threshold becomes Ac in a curve section and the threshold becomes Al in a section other than a curve section. Here, the threshold Ac < the threshold Al. In a curve section, the acceleration in a lateral direction to be the trigger to start the control of the roll stiffness is smaller than in a section other than the curve section. In a section other than a curve section, the aforementioned acceleration is larger than in a curve section.

Here, for setting the threshold, the stabilizer control unit 21c in this embodiment obtains the above-described start position of a curve section, obtains based on the vehicle speed a predicted arrival time to arrive at the start position of the curve section from the current position of the vehicle, and sets the threshold value to start the control of the roll stiffness to Ac when the predicted arrival time is not longer than a predetermined threshold T. Specifically, the threshold regarding the acceleration in a lateral direction is set to Ac before the curve section, and roll stiffness control with high sensitivity is implemented precisely in the curve section.

Further, in this embodiment, to implement appropriate roll stiffness control in each curve section when curve sections continue at short intervals, it is arranged to keep in a straight section between continuous curve sections the threshold in the curve sections. Specifically, the stabilizer control unit 21c obtains information regarding all the curve sections within a predetermined range ahead of the vehicle, and obtains, when curve sections continue, the distance between the end position of a nearer curve section and the start position of a farther curve section. When the distance is not longer than a predetermined distance, the threshold in the curve sections is kept.

### (2) Stabilizer control processing

Next, the stabilizer control processing implemented by the navigation apparatus 10 in the above arrangement will be explained. When the navigation program 21 is executed by the navigation apparatus 10, the navigation program 21 is performing guide processing of a route or the like to the driver of the vehicle. In the course of this processing, in this embodiment, so-called map matching processing is performed.

The map matching processing is processing to assume that, when the traveling trace of the vehicle matches with a sequence of nodes and/or shape interpolation points, the vehicle is traveling on the road indicated by the nodes and/or the shape interpolation points. Conversely, when the vehicle is matching with the sequence of the nodes and/or the shape interpolation points by this map matching processing, it can be assumed that the vehicle is traveling on the road.

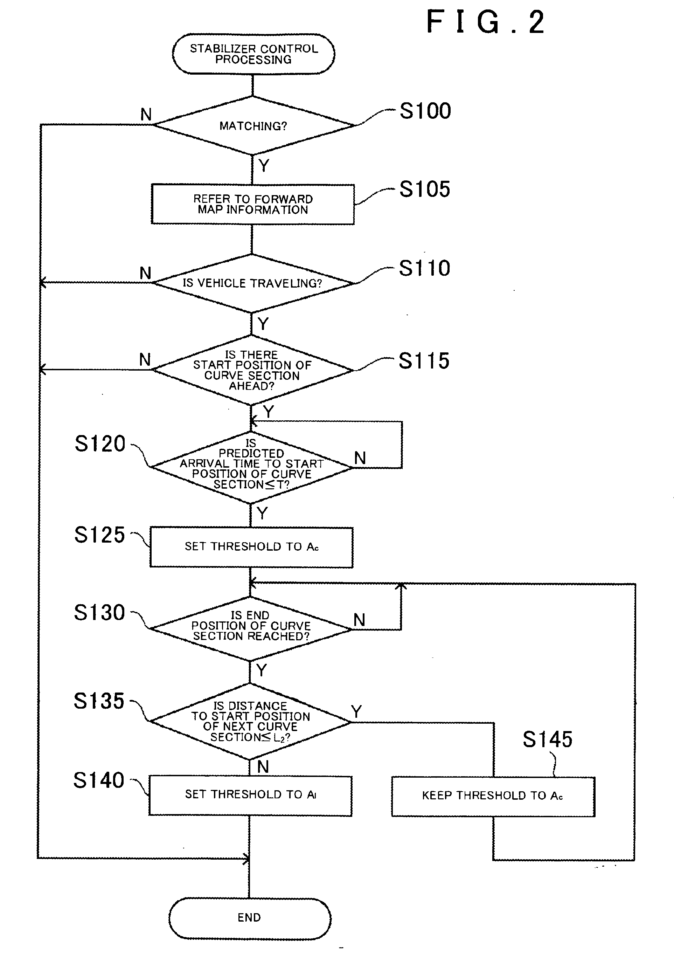

When the guide processing or the map matching processing as above is executed, the units included in the navigation program 21 execute stabilizer control processing shown in FIG. 2 at every predetermined time (for example, 100 ms). In this processing, in a section other than a curve section (except a section between continuous curve sections), the threshold to start the control of the roll stiffness is set to Al.

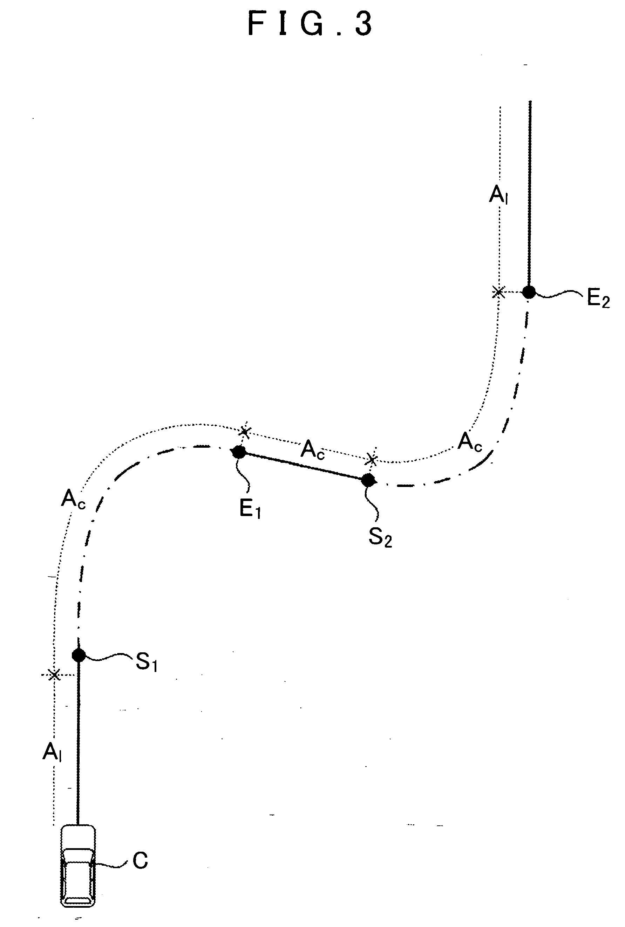

FIG. 3 is an explanatory view for explaining an operation example according to this embodiment. In FIG. 3, a solid line indicates a straight section on a road, and a chain-dashed line indicates a curve section on the road. Further, in the example shown in FIG. 3, the start position of the closest curve section existing ahead of the vehicle C is shown by S₁, and the end position thereof is shown by E₁. The start position of the next curve section from the closest curve section is shown by S₂, and the end position thereof is shown by E₂.

As shown in FIG. 3, when the vehicle C is traveling in a straight section, the threshold for starting the control of the roll stiffness is Al. In this state, when the stabilizer control processing shown in FIG. 2 is started, first the navigation program 21 determines in the above-described matching processing whether or not a traveling trace of the vehicle is matching with any sequence of nodes and/or shape interpolation points (step S100). When it is not determined as matching, the stabilizer control processing is terminated.

In step S100, when it is determined as matching, the curve section information obtaining unit 21b refers to the map information 30a and obtains information indicating curve sections existing in a predetermined range ahead of the vehicle (step S105). Next, the navigation program 21 determines based on information indicating the vehicle speed outputted by the vehicle speed sensor 42 whether the vehicle is traveling or not (step S110). When it is not determined that the vehicle is traveling, the stabilizer control processing is terminated.

In step S110, when it is determined that the vehicle is traveling, the curve section information obtaining unit 21b determines whether or not the start position of a curve section exists ahead of the vehicle based on the information indicating curve sections obtained in the above-described step S105 (step S115). Specifically, the curve section information obtaining unit 21b compares the current position of the vehicle and the start position of a curve section existing ahead of the vehicle, and determines whether or not the distance between the both is equal to or shorter than a predetermined distance L₁ (for example, 100 m). When it is not determined in step S115 that the start position of a curve section exists ahead of the vehicle, the stabilizer control processing is terminated.

On the other hand, when it is determined in step S 115 that the start position of a curve section exists ahead of the vehicle, the stabilizer control unit 21c obtains the predicted arrival time to the start position based on the vehicle speed of the vehicle and the distance L₁ from the current position of the vehicle to the start position of the curve section, and determines whether or not the predicted arrival time is equal to or shorter than a predetermined threshold T (for example, 1.5 seconds) (step S120). In step S120, when it is not determined that the predicted arrival time from the vehicle to the start position of the curve section is equal to or shorter than the predetermined threshold T, the determination in this step S120 is repeated.

On the other hand, when it is determined in step S120 that the predicted arrival time from the vehicle to the start point of the curve section is equal to or shorter than the threshold T, the stabilizer control unit 21c outputs a control signal to the stabilizer 43 to set the threshold when controlling the roll stiffness in the stabilizer 43 to Ac (step S125).

In the example shown in FIG. 3, the threshold is changed from Al to Ac before the vehicle reaches the start position S₁ of the curve section. Therefore, in the curve section, the control of the roll stiffness in the stabilizer 43 is performed even in a state that minute acceleration in a lateral direction equal to or larger than the threshold Ac and equal to or smaller than the threshold Al operates on the vehicle, and the control of the roll stiffness can be performed appropriately in the curve section. Further, in a section other than a curve section (in the example shown in FIG. 3, the section before the start position S₁ in which the threshold is Al), the roll stiffness is controlled according to the acceleration in a lateral direction that is larger than in the curve section, and the roll stiffness will not increase inappropriately according to the minute acceleration in a lateral direction (acceleration equal to or larger than the threshold Ac and equal to or smaller than the threshold Al).

Next, the stabilizer control unit 21c determines whether the vehicle reaches the end position of the curve section or not (step S130). Specifically, the stabilizer control unit 21c obtains information indicating the end position of the curve section and the information indicating the current position of the vehicle, and determines whether or not the current position of the vehicle matches with the end position of the curve section. When it is not determined in step S130 that the vehicle has reached the end position of the curve section, the determination in step S 130 is repeated.

When it is determined in step S130 that the vehicle reaches the end position of the curve section, the stabilizer control unit 21c further determines whether or not the distance to the start position of the next curve section is equal to or shorter than a predetermined distance L₂ (for example, 50 m) (step S135). Specifically, the stabilizer control unit 21c determines, based on the information indicating curve sections obtained by the curve section information obtaining unit 21b and the information indicating the current position of the vehicle, whether or not the next curve section further exists ahead of the curve section passed by the vehicle, and whether the distance from the current position of the vehicle to the start position of the next curve section is equal to or shorter than the predetermined distance L₂.

In step S135, when it is not determined that the distance to the start position of the next curve section is equal to or shorter than the predetermined distance L₂, it is assumed that the next curve section is not approaching ahead of the vehicle, and the stabilizer control unit 21c sets the threshold when controlling the roll stiffness in the stabilizer 43 to Al (step S140).

On the other hand, in step S135, when it is determined that the distance to the start position of the next curve section is equal to or shorter than the predetermined distance L₂, it is assumed that the next curve section is approaching ahead of the vehicle, and the stabilizer control unit 21c keeps the state that the threshold when controlling the roll stiffness in the stabilizer 43 is set to Ac (step S 145).

Then, the stabilizer control unit 21c obtains the information indicating curve sections obtained by the curve section information obtaining unit 21b and repeats the processing of step S130 and thereafter. That is, the processing to determine whether or not the vehicle has reached the end position of the next curve section is performed, and the processing to set the threshold is repeated.

In the example shown in FIG. 3, there is shown an example of the case where the distance between the end position E₁ of the curve section and the start position S₂ of the next curve section is equal to or shorter than the predetermined distance L₂, and on this road, step S145 is implemented after passing through step S135. Therefore, in this example, the threshold to start the control of the roll stiffness is kept to Ac as it is also between the end position E₁ of the curve section and the start position S₂ of the next curve.

Further, while the threshold for starting the control of the roll stiffness is kept to Ac, the vehicle C travels from the start position S₂ of the curve section to the end position E₂ thereof. When the vehicle C reaches the end position E₂, the threshold is returned to Al of the normal state in step S140 after passing through the determination in S130 and S135. Therefore, after the end position E₂ of the curve section, the threshold for starting the control of the roll stiffness is set to Al. By the above processing, in the vehicle C, the state that the sensitivity to the acceleration in a lateral direction is high is kept also when curve sections continue at short intervals, and the roll stiffness can be controlled so as to securely prevent rolling in the curve sections.

### (3) Other embodiments

The above embodiment is an example for implementing the present invention. Other various embodiments can be adopted as long as information indicating curve sections is obtained, and in the curve section a smaller threshold than in a section other than the curve section is set for the acceleration in a lateral direction. For example, the sensor for obtaining the acceleration in a lateral direction is not limited to the acceleration sensor or the like for obtaining the acceleration in a lateral direction directly. The acceleration in a lateral direction may be obtained indirectly by estimation based on detection values from a rudder angle sensor and a vehicle speed sensor or a detection value from a sensor or the like indicating behavior of the suspensions. It is thus possible to adopt various arrangements.

The curve section information obtaining unit 21b is sufficient as long as it is capable of obtaining the information indicating curve sections, and as long as it is capable of obtaining the information indicating curve sections where the curvature is equal to a predetermined value on the road on which the vehicle is traveling. Therefore, an arrangement to obtain information indicating the start position, the end position, and the like of a curve section from a storage medium may be adopted. Further, an arrangement to record information indicating positions of nodes and shape interpolation points in advance in a storage medium, and obtain the information indicating curve sections by identifying the road shape from a sequence of the nodes and shape interpolation points, may be adopted. As a matter of course, the information indicating curve sections may be included in the map information 30a as described above, or may be recorded as information different from the map information 30a.

Further, as described above, in the arrangement to keep in continuous curve sections the threshold Ac for the curve sections, various arrangements can be adopted for an arrangement to obtain the information indicating continuous curve sections. Information regarding curve sections existing in a predetermined range from the vehicle may be obtained, or information regarding curve sections existing in a predetermined range from the curve section closest to the vehicle may be obtained.

Furthermore, an arrangement to decide the roll stiffness distribution to the stabilizers provided in the front part and the rear part of the vehicle respectively as described above based on gradient information may be obtained. Specifically, in normal stabilizer control, the roll stiffness distribution is decided depending on the vehicle speed. However, in the arrangement to decide the roll stiffness distribution depending only on the vehicle speed, it is possible that, on a downward or upward slope, the steering characteristic becomes an under steering or over steering characteristic. For example, in a curve section having a downward slope, it is possible that the steering characteristic becomes the over steering characteristic, and thereby the vehicle becomes unstable.

Accordingly, it may be arranged such that, besides the information indicating curve sections on the road from the map information 30a, gradient information of the road surface is further obtained, and the stabilizer control unit 21c changes the distribution of the front and rear stabilizer control amounts according to the obtained gradient information. Specifically, the distribution of a control amount to the stabilizer for the front wheels is increased in a downward slope (stiffening the stabilizer), to thereby suppress the over steering characteristic. Accordingly, the steering characteristic on a downward or upward slope can be stabilized, and the safety of the vehicle improves.
Information indicating acceleration in a lateral direction operating on a vehicle is obtained. Information indicating a curve section existing in a traveling direction of the vehicle is obtained. In a stabilizer control step of controlling roll stiffness by a stabilizer mounted on the vehicle based on information indicating the acceleration in a lateral direction, in the curve section a smaller threshold than in a section other than the curve section is set for the acceleration in a lateral direction, and the roll stiffness is controlled when the acceleration in a lateral direction is equal to or larger than the threshold.

## Claims

1. A stabilizer control device, comprising:
a lateral acceleration information obtaining unit **(21a)** obtaining information indicating acceleration in a lateral direction operating on a vehicle;
a curve section information obtaining unit **(21b)** obtaining information indicating a curve section existing in a traveling direction of the vehicle; and
a stabilizer control unit **(21c)** controlling roll stiffness by a stabilizer mounted on the vehicle based on the information indicating the acceleration in the lateral direction,
**characterized in that**
the stabilizer control unit **(21c)** sets in the curve section a smaller threshold (**A**_{c}) than in a section other than the curve section for the acceleration in the lateral direction, and controls the roll stiffness when the acceleration in the lateral direction is equal to or larger than the threshold, and
controls the roll stiffness to be higher as the acceleration in the lateral direction gets larger, and controls a degree of response to the acceleration in the lateral direction to be larger in the curve section than in the section other than the curve section. -

2. The stabilizer control device according to claim 1, **characterized in that** the curve section information obtaining unit **(21b)** obtains information indicating the curve section by referring to map information (**30a**) recorded in a storage medium (**30**).

3. The stabilizer control device according to claim 1 or 2, **characterized in that** the curve section information obtaining unit **(21b)** obtains information indicating two or more curve sections existing in a traveling direction of the vehicle, and
the stabilizer control unit (**21c**) obtains a distance between curve sections based on the information indicating two or more curve sections, and keeps a state that the smaller threshold (**A**_{c}) is set through the curve sections when the distance between the curve sections is equal to or shorter than a predetermined distance.

4. The stabilizer control device according to anyone of claims 1 to 3, **characterized in that** the degree of response is an adjustment width of the roll stiffness.

5. A stabilizer control method, comprising:
a lateral acceleration information obtaining step of obtaining information indicating acceleration in a lateral direction operating on a vehicle;
a curve section information obtaining step of obtaining information indicating a curve section existing in a traveling direction of the vehicle; and
a stabilizer control step of controlling roll stiffness by a stabilizer mounted on the vehicle based on the information indicating the acceleration in the lateral direction,
**characterized in that**
in the stabilizer control step, in the curve section a smaller threshold (**A**_{c}) than in a section other than the curve section is set for the acceleration in the lateral direction, and the roll stiffness is controlled when the acceleration in the lateral direction is equal to or larger than the threshold, and
controls the roll stiffness to be higher as the acceleration in the lateral direction gets larger, and controls a degree of response to the acceleration in the lateral direction to be larger in the curve section than in the section other than the curve section.

6. A stabilizer control program causing a computer to realize:
a lateral acceleration information obtaining function obtaining information indicating acceleration in a lateral direction operating on a vehicle;
a curve section information obtaining function obtaining information indicating a curve section existing in a traveling direction of the vehicle; and
a stabilizer control function controlling roll stiffness by a stabilizer mounted on the vehicle based on the information indicating the acceleration in the lateral direction,
**characterized in that**
the stabilizer control function sets in the curve section a smaller threshold (**A**_{c}) than in a section other than the curve section for the acceleration in the lateral direction, and controls the roll stiffness when the acceleration in the lateral direction is equal to or larger than the threshold, and
controls the roll stiffness to be higher as the acceleration in the lateral direction gets larger, and controls a degree of response to the acceleration in the lateral direction to be larger in the curve section than in the section other than the curve section.

## Patentansprüche

1. Stabilisatorsteuervorrichtung mit:
einer Laterale-Beschleunigung-Informationserhaltungseinheit (21a), die Informationen erhält, die eine auf ein Fahrzeug wirkende Beschleunigung in einer lateralen Richtung anzeigen;
einer Kurvenabschnitt-Informationserhaltungseinheit (21b), die Informationen erhält, die einen in einer Fahrtrichtung des Fahrzeugs existierenden Kurvenabschnitt anzeigen; und
einer Stabilisatorsteuereinheit (21c), die eine Wanksteifigkeit durch einen auf dem Fahrzeug angebrachten Stabilisator basierend auf den Informationen, die die Beschleunigung in der lateralen Richtung anzeigen, steuert,
**dadurch gekennzeichnet, dass**
die Stabilisatorsteuereinheit (21c) in dem Kurvenabschnitt einen kleineren Schwellwert (A_{c}) als in einem von dem Kurvenabschnitt verschiedenen Abschnitt für die Beschleunigung in der lateralen Richtung einstellt, und die Wanksteifigkeit steuert, wenn die Beschleunigung in der lateralen Richtung gleich oder größer als der Schwellwert ist, und
die Wanksteifigkeit steuert, um größer zu sein, wenn die Beschleunigung in der lateralen Richtung zunimmt, und einen Ansprechgrad auf die Beschleunigung in der lateralen Richtung steuert, um in dem Kurvenabschnitt größer zu sein, als in dem von dem Kurvenabschnitt verschiedenen Abschnitt.

2. Stabilisatorsteuervorrichtung nach Anspruch 1, wobei die Kurvenabschnitt-Informationserhaltungseinheit (21b) Informationen, die den Kurvenabschnitt anzeigen, durch Beziehen auf in einem Speichermedium (30) aufgenommen Karteninformationen (30a) erhält.

3. Stabilisatorsteuervorrichtung nach Anspruch 1 oder 2, wobei die Kurvenabschnitt-Informationserhaltungseinheit (21b) Informationen erhält, die zwei oder mehrere in einer Fahrtrichtung des Fahrzeugs existierende Kurvenabschnitte anzeigen, und
die Stabilisatorsteuereinheit (21c) eine Entfernung zwischen Kurvenabschnitten basierend auf den Informationen erhält, die zwei oder mehrere Kurvenabschnitte anzeigen, and einen Zustand hält, dass der kleinere Schwellwert (A_{c}) durch die Kurvenabschnitte eingestellt wird, wenn die Entfernung zwischen den Kurvenabschnitten gleich oder kleiner als eine vorbestimmte Entfernung ist.

4. Stabilisatorsteuervorrichtung nach einem der Ansprüche 1 bis 3, wobei der Ansprechgrad eine Breiteneinstellung der Wanksteifigkeit darstellt.

5. Stabilisatorsteuerverfahren mit:
einem Laterale-Beschleunigung-Informationserhaltungsschritt zum Erhalten von Informationen, die eine auf ein Fahrzeug wirkende Beschleunigung in einer lateralen Richtung anzeigen;
einem Kurvenabschnitt-Informationserhaltungsschritt zum Erhalten von Informationen, die einen in einer Fahrtrichtung des Fahrzeugs existierenden Kurvenabschnitt anzeigen; und
einem Stabilisatorsteuerschritt zum Steuern einer Wanksteifigkeit durch einen auf dem Fahrzeug angebrachten Stabilisator basierend auf den Informationen, die die Beschleunigung in der lateralen Richtung anzeigen,
**dadurch gekennzeichnet, dass**
bei dem Stabilisatorsteuerschritt in dem Kurvenabschnitt ein kleinerer Schwellwert (A_{c}) als in einem von dem Kurvenabschnitt verschiedenen Abschnitt für die Beschleunigung in der lateralen Richtung eingestellt wird, und die Wanksteifigkeit gesteuert wird, wenn die Beschleunigung in der lateralen Richtung gleich oder größer als der Schwellwert ist, und
die Wanksteifigkeit gesteuert wird, um größer zu sein, wenn die Beschleunigung in der lateralen Richtung zunimmt, und ein Ansprechgrad auf die Beschleunigung in der lateralen Richtung gesteuert wird, um in dem Kurvenabschnitt größer als in dem von dem Kurvenabschnitt verschiedenen Abschnitt zu sein.

6. Stabilisatorsteuerprogramm, das einen Computer veranlasst, Folgendes zu realisieren:
eine Laterale-Beschleunigung-Informationserhaltungsfunktion, die Informationen erhält, die eine auf ein Fahrzeug wirkende Beschleunigung in einer lateralen Richtung anzeigen;
eine Kurvenabschnitt-Informationserhaltungsfunktion, die Informationen erhält, die einen in einer Fahrtrichtung des Fahrzeugs existierenden Kurvenabschnitt anzeigen; und
eine Stabilisatorsteuerfunktion, die eine Wanksteifigkeit durch einen auf dem Fahrzeug angebrachten Stabilisator basierend auf den Informationen, die die Beschleunigung in der lateralen Richtung anzeigen, steuert,
**dadurch gekennzeichnet, dass**
die Stabilisatorsteuerfunktion in dem Kurvenabschnitt einen kleineren Schwellwert (A_{c}) als in einem von dem Kurvenabschnitt verschiedenen Abschnitt für die Beschleunigung in der lateralen Richtung einstellt, und die Wanksteifigkeit steuert, wenn die Beschleunigung in der lateralen Richtung gleich oder größer als der Schwellwert ist, und
die Wanksteifigkeit steuert, um größer zu sein, wenn die Beschleunigung in der lateralen Richtung zunimmt, und einen Ansprechgrad auf die Beschleunigung in der lateralen Richtung steuert, um in dem Kurvenabschnitt größer zu sein als in dem von dem Kurvenabschnitt verschiedenen Abschnitt.

## Revendications

1. Dispositif de commande de stabilisateur, comprenant :
une unité d'obtention d'informations d'accélération latérale (21a) obtenant des informations indiquant une accélération dans une direction latérale agissant sur un véhicule ;
une unité d'obtention d'informations de section de courbe (21b) obtenant des informations indiquant une section de courbe existant dans une direction de déplacement du véhicule ; et
une unité de commande de stabilisateur (21c) commandant la rigidité au roulis par un stabilisateur monté sur le véhicule sur la base des informations indiquant l'accélération dans la direction latérale,
**caractérisé en ce que**
l'unité de commande de stabilisateur (21c) fixe, dans la section de courbe, un seuil (A_{c}) plus faible que dans une section autre que la section de courbe pour l'accélération dans la direction latérale, et commande la rigidité au roulis lorsque l'accélération dans la direction latérale est égale ou supérieure au seuil, et
commande la rigidité au roulis pour qu'elle soit plus grande alors que l'accélération dans la direction latérale augmente, et commande un degré de réaction à l'accélération dans la direction latérale pour qu'il soit plus grand dans la section de courbe que dans la section autre que la section de courbe.

2. Dispositif de commande de stabilisateur selon la revendication 1, **caractérisé en ce que** l'unité d'obtention d'informations de section de courbe (21b) obtient des informations indiquant la section de courbe en se référant à des informations de carte (30a) enregistrées sur un support de mémorisation (30).

3. Dispositif de commande de stabilisateur selon la revendication 1 ou 2, **caractérisé en ce que** l'unité d'obtention d'informations de section de courbe (21b) obtient des informations indiquant deux sections de courbe ou plus existant dans une direction de déplacement du véhicule, et
l'unité de commande de stabilisateur (21c) obtient une distance entre les sections de courbe sur la base des informations indiquant deux sections de courbe ou plus, et maintient un état dans lequel le seuil (A_{c}) plus faible est fixé dans les sections de courbe lorsque la distance entre les sections de courbe est égale ou inférieure à une distance prédéterminée.

4. Dispositif de commande de stabilisateur selon l'une quelconque des revendications 1 à 3, **caractérisé en ce que** le degré de réaction est une largeur d'ajustement de la rigidité au roulis.

5. Procédé de commande de stabilisateur, comprenant :
une étape d'obtention d'informations d'accélération latérale pour obtenir des informations indiquant une accélération dans une direction latérale agissant sur un véhicule ;
une étape d'obtention d'informations de section de courbe pour obtenir des informations indiquant une section de courbe existant dans une direction de déplacement du véhicule ; et
une étape de commande de stabilisateur pour commander la rigidité au roulis par un stabilisateur monté sur le véhicule sur la base des informations indiquant l'accélération dans la direction latérale,
**caractérisé en ce que**
à l'étape de commande de stabilisateur, dans la section de courbe, un seuil (A_{c}) plus faible que dans une section autre que la section de courbe est fixé pour l'accélération dans la direction latérale, et la rigidité au roulis est commandée lorsque l'accélération dans la direction latérale est égale ou supérieure au seuil, et
la rigidité au roulis est commandée pour qu'elle soit plus grande alors que l'accélération dans la direction latérale augmente, et un degré de réaction à l'accélération dans la direction latérale est commandé pour qu'il soit plus grand dans la section de courbe que dans la section autre que la section de courbe.

6. Programme de commande de stabilisateur amenant un ordinateur à effectuer :
une fonction d'obtention d'informations d'accélération latérale pour obtenir des informations indiquant une accélération dans une direction latérale agissant sur un véhicule ;
une fonction d'obtention d'informations de section de courbe pour obtenir des informations indiquant une section de courbe existant dans une direction de déplacement du véhicule ; et
une fonction de commande de stabilisateur pour commander la rigidité au roulis par un stabilisateur monté sur le véhicule sur la base des informations indiquant l'accélération dans la direction latérale,
**caractérisé en ce que**
la fonction de commande de stabilisateur fixe, dans la section de courbe, un seuil (A_{c}) plus faible que dans une section autre que la section de courbe pour l'accélération dans la direction latérale, et commande la rigidité au roulis lorsque l'accélération dans la direction latérale est égale ou supérieure au seuil, et
commande la rigidité au roulis pour qu'elle soit plus grande alors que l'accélération dans la direction latérale augmente, et commande un degré de réaction à l'accélération dans la direction latérale pour qu'il soit plus grand dans la section de courbe que dans la section autre que la section de courbe.
